# EUROPÄISCHE PATENTSCHRIFT

(11) **EP 1 866 549 B1**
(45) Veröffentlichungstag und Bekanntmachung des Hinweises auf die Patenterteilung: **20.05.2009**
(21) Anmeldenummer: 06725511.7
(22) Anmeldetag: 03.04.2006
(51) Int. Cl.: F16B 7/04, E04H 15/48

(54) **HÜLSE UND DAMIT VERSEHENES BAUTEIL**
SLEEVE AND COMPONENT PROVIDED THEREFOR
MANCHON ET ELEMENT MUNI D'UN TEL MANCHON

(30) Priorität: 01.04.2005 DE 202005005286 U
(43) Veröffentlichungstag der Anmeldung: 19.12.2007
(73) Patentinhaber: Losberger GmbH, 74906 Bad Rappenau (DE)
(72) Erfinder: LOSBERGER, Friedrich, 74232 Abstatt (DE)
(74) Vertreter: Sommer, Peter
(86) Internationale Anmeldenummer: PCT/EP2006/061265
(87) Internationale Veröffentlichungsnummer: WO 2006/103297

(56) Entgegenhaltungen:
- CH-A- 131 649
- DE-U1- 9 211 608
- US-B2- 6 557 572

## Beschreibung

### Technisches Gebiet

Die Erfindung bezieht sich auf eine Hülse zum Einbringen in eine zwei Seiten eines Bauteils verbindende Öffnung, die mindestens einen eine Längsachse aufweisenden Hohlkörper mit einer Außenseite aufweist, wobei der Hohlkörper zumindest mit einem Teil der Außenseite zumindest in radialer Richtung zur Längsachse an das Bauteil anlegbar ist und auf ein mit einer derartigen Hülse versehenes Bauteil. Die Hülse ist durch mindestens zwei in Richtung der Längsachse nacheinander angeordnete Hülsenkörper gebildet, wobei der erste Hülsenkörper und der zweite Hülsenkörper in axialer Richtung zur Längsachse über zumindest ein Verbindungselement Form- und/oder kraftschlüssig miteinander verbindbar sind.

### Stand der Technik

Es ist bereits eine Hülse allgemein bekannt, die bevorzugt in eine zwei Seiten eines als Hohlprofil ausgebildeten Bauteils verbindende Öffnung bzw. Bohrung eingebracht wird. Ebenso wie die erfindungsgemäße Hülse dient auch diese Hülse dazu, das Hohlprofil beim Anschrauben weiterer Bauteile gegen Beschädigungen der Lochleibung und gegen Zusammendrücken des Hohlprofils zu schützen. Die Hülse nimmt die über eine innerhalb der Hülse angeordnete Verschraubung eingebrachte Montagekraft auf. Durch die Hülse wird der Lochleibungsdruck eines Schraubbolzens mit einem kleinen Durchmesser auf eine größere Fläche verteilt. Gleichzeitig dient die Hülse als Distanzstück für die Verschraubung, damit gerade beim Einsatz von Hohlprofilen diese nicht zusammengedrückt werden.

Die bekannte Hülse weist gegenüber dem Hohlprofil einen Übestand auf, d. h. sie ist breiter als das Hohlprofil. Nach dem Einführen in das Hohlprofil wird die Presshülse stirnseitig umgebördelt, sodass ein Bund entsteht, der die Presshülse in axialer Richtung am Hohlprofil fixiert. In umgebördeltem Zustand ist die Hülse immer noch breiter als das Bauteil, d. h. der Bund steht über. Das Umbördeln erfolgt mit einer Taumelnietmaschine, die im Allgemeinen aufgrund ihrer Größe stationär betrieben wird. In radialer Richtung liegt die Presshülse spielfrei an der Bchrung an. Dies wird bevorzugt über eine gerändelte Fläche an der Hülse bewirkt, die gleichzeitig ein Verdrehen der Hülse verhindert.

Aus der DE 92 11 608 U1 ist eine Verbindung zweier Hülsenteile mittels einer Schraub- oder Restverbindung bekannt.

Der Erfindung liegt die Aufgabe zugrunde, eine Hülse der gattungsgemäßen Art derart auszubilden und anzuordnen, dass sie einfacher und schneller montiert und präziser an Bautoleranzen angepasst werden kann.

### Darstellung der Erfindung

Gelöst wird die Aufgabe erfindungsgemäß dadurch, dass beide Hülsenkörper in Richtung der Längsachse auf einer Seite das Verbindungselement und auf der dem Verbindungselement gegenüberliegenden Seite eine Anformung zum Befestigen des Hülsenkörpers an dem Bauteil aufweisen.

Von besonderer Bedeutung ist für die vorliegende Erfindung, dass zumindest ein Teil der Anformung durch einen auf der Außenseite des Hülsenkörpers umlaufenden Bund gebildet ist und der Hülsenkörper über den Bund in Richtung der Längsachse gegen das Bauteil anlegbar ist. Die Anformung ersetzt den im Stand der Technik bekannten umgebördelten Rand, der die Hülse in axialer Richtung gegenüber dem Bauteil fixiert. Hierdurch wird erreicht, dass jeweils ein Teil der Hülse von jeweils gegenüberliegenden Seiten in die Öffnung eingesteckt werden kann und somit der für die Funktion der Hülse notwendige Bund schon vor der Montage an die Hülse, z. B. durch Drehen, angeformt werden kann. Dies hat in der Folge den Vorteil, dass das aufwendige Bördelverfahren zum Erzeugen des Bundes und zur Montage der Hülse nicht notwendig ist und die Hülse vor Ort montiert werden kann. Zudem können Hülsen mit großen Wandstärken und aus einem Material mit hoher Festigkeit eingesetzt werden, da der Bund nicht durch Bördeln angeformt werden muss.

Eine solche Anordnung ermöglicht es, die Verbindungsstelle innerhalb des Bauteils bzw. des Hohlprofils anzuordnen und die Hülse von beiden Seiten in die Öffnung des Bauteils bzw. Hohlprofils einzuführen. Der Bund wird durch Drehen und die Rändelung durch ein Rändelwerkzeug vor der Montage der Hülse an der Hülse angebracht.

Die Verbindung kann form- und/oder kraft- und/oder stoffschlüssig sein, z.B eine Rastverbindung, eine Schraubverbindung, eine Preßsitzverbindung oder eine Klebeverbindung. Darüber hinaus kann auch eine Verbindung, die etwa durch Reibschweißen hergestellt wird, zum Einsatz gelangen.

Vorteilhaft ist es auch, wenn das Verbindungselement als Rastelement, als Gewinde oder als Pressverbindung ausgebildet ist. Dadurch wird eine schnelle und gegenüber dem bekannten Verfahren manuelle Montage ermöglicht. Rastelemente lassen sich ggf. mit Hilfe einer Zange ebenso wie Gewinde mit Hilfe eines Schraubenschlüssels ohne stationäres Werkzeug einfach verbinden. Die Rastverbindung hat gegenüber einem Gewinde den Vorteil, dass die beiden Hülsenkörper gleichzeitig beim Festziehen der Verschraubung des Bauteils verpresst werden können. Große Hülsen können auch mit einer hydraulischen Presse oder mit einem separaten Gewindebolzen mit Mutter verpresst werden.

Ferner ist es vorteilhaft, wenn der erste Hülsenkörper zumindest teilweise in den zweiten Hülsenkörper einführbar ist. Eine solche Steckverbindung gewährleistet einen definierten Stoßpunkt und gleichzeitig einen konstanten Außendurchmesser. Der Außendurchmesser der Hülse darf nämlich zumindest in dem Bereich, in dem die Hülse in die Öffnung eingeführt werden muss, ein gewisses Maß nicht überschreiten. Ausgehend vom Stoßpunkt können die Hülsenkörper miteinander verpresst oder verschraubt werden.

Dabei ist es vorteilhafterweise vorgesehen, wenn zumindest ein Teil der Anformung durch eine auf der Außenseite des Hülsenkörpers umlaufende Rändelung gebildet ist, die derart dimensioniert ist, dass sie zumindest über einen Teil des Umfangs des Hülsenkörpers formschlüssig in das Bauteil eingreifen kann. Je nach Ausbildung des Verbindungselements zwischen den beiden Hülsenkörpern ist es von Vorteil, beide Hülsenkörper mit Hilfe der Rändelung gegen Verdrehen im Bauteil zu sichern. Die Rändelung dringt bei der Montage in die Lochleibung ein.

Vorteilhaft ist es ferner, wenn der Bund eine Stirnseite des Hülsenkörpers bildet. In den meisten Fällen ist es notwendig, dass die Stirnseite der Hülse bündig mit der Seitenfläche des Bauteils abschließt. Der Bund, der gleichzeitig die Stirnfläche der Hülse bildet, kann bspw. in der Form eines Senkkopfes derart geformt sein, dass die Stirnseite und die Seitenfläche des Bauteils bündig abschließen.

Der Bund wird mit Hilfe einer entsprechenden Fase an der Öffnung des Bauteils in dieser versenkt.

Außerdem ist es vorteilhaft, wenn der Hülsenkörper zumindest eine optisch erkennbare Markierung über eine oder mehrere Eigenschaften des Hülsenkörpers auf der Außenseite und/oder auf der Stirnseite aufweist. Durch die Markierung kann auf einfache Weise bspw. die Abmessung und die Art des Werkstoffs des jeweiligen Hülsenkörpers angezeigt werden. Gerade bei Bausätzen, bei denen verschieden lange Hülsen zum Einsatz kommen, ist die Länge der Hülsenkörper von großer Bedeutung. Die Hülse kann aus Metalllegierungen oder auch aus Kunststoff sowie aus einer Kombination von Metall und Kunststoff hergestellt werden. Als Kunststoffe kommen zähe Materialien mit einem hohen Elastizitätsmodul wie bspw. Polyvinylchlorid (PVC), Polyamid (PA), Polyoximethylen (POM) und verschiedene andere Polymere wie auch Polyester in Betracht. Die Kunststoffe können auch faserverstärkt sein.

Ferner ist es vorteilhaft, wenn der Hohlkörper einen kreisrunden, ovalen oder rechteckförmigen Querschnitt aufweist. Die erfindungsgemäße Hülse kann bspw. bei Leitersystemen als Alternative für die gewöhnlich rechteckförmigen, umgebördelten Sprossen eingesetzt werden.

Hinsichtlich der Montage ist es von Vorteil, wenn in die beiden Hülsenkörper ein Zentrierstab einführbar ist, mit Hilfe dessen die beiden Hülsenkörper zueinander zentrierbar sind. Dies ermöglicht es gerade bei sehr langen Hülsen, die beiden Hülsenkörper schnell zusammenzuführen und einen richtigen Sitz ohne Verkanten am Stoßpunkt zu gewährleisten. Dabei ist zu berücksichtigen, dass der Hohlraum des Bauteils in der Regel nicht einsehbar ist.

Ferner ist es für die Montage von Vorteil, wenn die beiden Hülsenkörper manuell und/oder mit einem manuell oder pneumatisch oder hydraulisch angetriebenen Werkzeug verbindbar sind. Der Einsatz einer teueren und aufwendigen Taumelnietmaschine ist nicht notwendig.

Für eine einfache manuelle Verbindung ist es vorteilhaft, wenn der Hülsenkörper im Bereich des Verbindungselements in Richtung der Längsachse verlaufende Schlitze aufweist. Die Schlitze trennen das jeweilige Verbindungselement in Umfangsrichtung. Dadurch wird erreicht, dass die beiden als Rastelement ausgebildeten Verbindungselemente ohne großen Kraftaufwand verbunden werden können, da sich die Hülsenkörper im Bereich der Schlitze leichter spreizen lassen.

Eine zusätzliche Möglichkeit ist gemäß einer Weiterbildung, wenn das als Rastelement ausgebildete Verbindungselement des ersten Hülsenkörpers aus zumindest einer in Umfangsrichtung umlaufenden Hinterschneidung und das als Rastelement ausgebildete Verbindungselement des zweiten Hülsenkörpers aus einer in Umfangsrichtung umlaufenden Rastnase gebildet ist, die in die Hinterschneidung eingreift. Eine solche Verbindung ist bevorzugt nicht mehr lösbar.

Letztlich ist es von Vorteil, wenn mindestens ein dritter Hülsenkörper mit zwei Verbindungselementen vorgesehen ist, der als Verlängerung zwischen den ersten Hülsenkörper und den zweiten Hülsenkörper einsetzbar ist. Dadurch wird erreicht, dass die Länge der Hülse mit einfachen und billigeren Bauteilen variiert werden kann, ohne erneut eine Rändelung und einen Bund anfertigen zu müssen. Dies ist auch hinsichtlich der Stabilität der Hülse nicht von Nachteil, da diese in Richtung der Längsachse ohnehin nur druckbelastet ist. In einem weiteren Schritt ist vorgesehen, zumindest die Verlängerungsteile aus den vorstehend genannten Kunststoffen und die beiden unmittelbar mit dem Bauteil verbundenen Hülsenkörper aus Metall zu fertigen. Das Verlängerungsstück ist keinem Verschleiß ausgesetzt und kann bei Verwendung eines druckfesten Kunststoffes durchaus formstabil die notwendigen Kräfte dauerhaft übertragen.

Ein Bauteil mit einer Hülse in einer zwei Seiten des Bauteil verbindenden Öffnung, insbesondere ein Hohlprofil, weist erfindungsgemäß eine vorbeschriebene Hülse auf.

### Kurzbeschreibung der Zeichnung

Weitere Vorteile und Einzelheiten der Erfindung sind in den Patentansprüchen und in der Beschreibung erläutert und in den Figuren dargestellt. Es zeigt:
- Figur 1a: zwei Hülsenkörper vor dem Einführen in eine Öffnung eines Bauteils in perspektivischer Ansicht,
- Figur 1b: zwei Hülsenkörper gemäß Fig. 1a vor dem Einführen eines Zentrierstabs,
- Figur 1c: zwei Hülsenkörper gemäß Fig. 1b mit eingeführtem Zentrierstab,
- Figur 1d: zwei miteinander verrastete Hülsenkörper gemäß Fig. 1c,
- Figur 2a: einen Hohlkörper bestehend aus zwei miteinander über eine Rastverbindung verbundenen Hülsenkörpern in einer Seitenansicht mit einer Aufbrechung,
- Figur 2b: den Hohlkörper aus Fig. 2a mit zwei miteinander über eine Schraubverbindung verbundenen Hülsenkörpern,
- Figur 2c: den Hohlkörper aus Fig. 2a mit zwei miteinander über eine Klebeverbindung verbundenen Hülsenkörpern,
- Figur 3a: einen Hohlkörper bestehend aus zwei nicht miteinander verbundenen Hülsenkörpern mit jeweils einer ersten Markierung in einer perspektivischen Ansicht,
- Figur 3b: einen Hohlkörper gemäß Fig. 3a mit einer zweiten Markierung,
- Figur 3c: einen Hülsenkörper mit einer dritten Markierung und in axialer Richtung verlaufenden Schlitzen.

### Ausführungsbeispiele der Erfindung

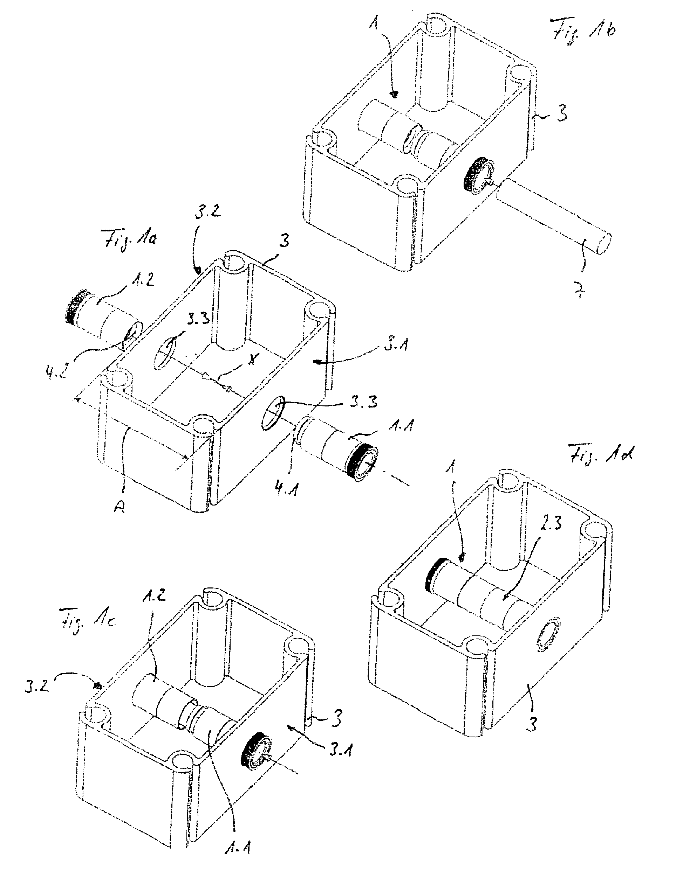

In den Fig. 1a bis 1d ist der Montageablauf einer Hülse bestehend aus einem Hohlkörper 1 mit einem ersten Hülsenkörper 1.1 und einem zweiten Hülsenkörper 1.2 dargestellt. Der erste Hülsenkörper 1.1 wird gemäß Fig. 1a von einer ersten Seite 3.1 eines als Hohlprofil ausgebildeten Bauteils 3 in eine Öffnung 3.3 eingeführt. Die Öffnung 3.3 verbindet die erste Seite 3.1 mit einer der ersten Seite 3.1 gegenüberliegenden zweiten Seite 3.2 des Bauteils 3. Der zweite Hülsenkörper 1.2 wird von der zweiten Seite 3.2 aus in die Öffnung 3.3 eingeführt.

Wie in Fig. 1b dargestellt, werden die beiden Hülsenkörper 1.1, 1.2 ohne zu verkanten mit Hilfe eines Zentrierstabs 7 am Stoßpunkt zusammengeführt. Der Zentrierstab 7 ist bevorzugt breiter als das Bauteil 3, damit die beiden Hülsenkörper 1.1, 1.2 gerade bei langen Hülsen oder bei schwer zugänglichen Montagestellen einfach eingefädelt werden können.

Die beiden Hülsenkörper 1.1, 1.2 werden über jeweils ein am Ende eines jeden Hülsenkörpers 1.1, 1.2 vorgesehenes Verbindungselement 4.1, 4.2 miteinander verbunden.

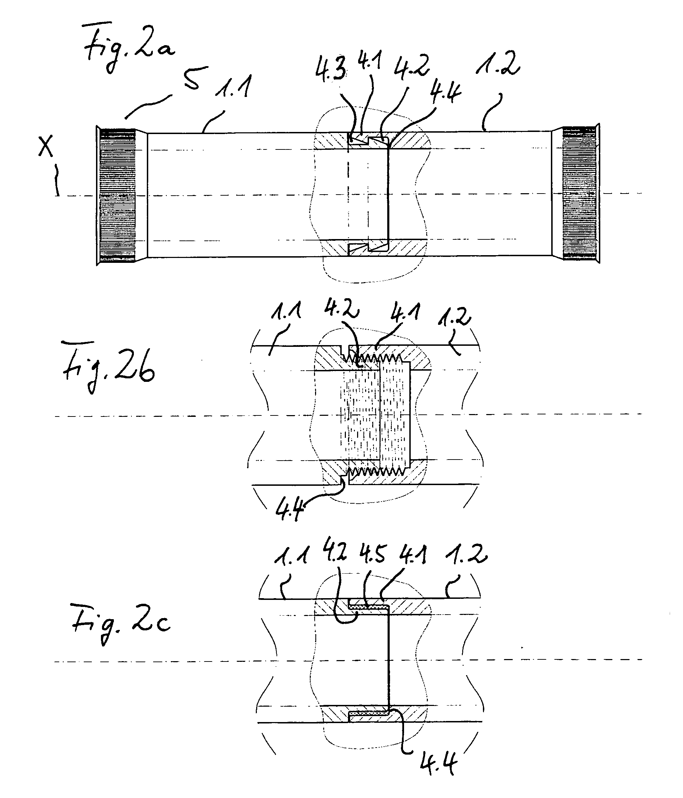

Wenn die beiden Hülsenkörper 1.1, 1.2 gemäß Fig. 1c eingefädelt sind, werden die in Fig. 2a näher beschriebenen und als Rastelemente ausgebildeten Verbindungselemente 4.1, 4.2, wie in Fig. 1d dargestellt, verpresst bzw. geschlossen. Die Verbindungselemente 4.1, 4.2 liegen dabei zwischen den beiden Seiten 3.1, 3.2 im Innern des Bauteils 3.

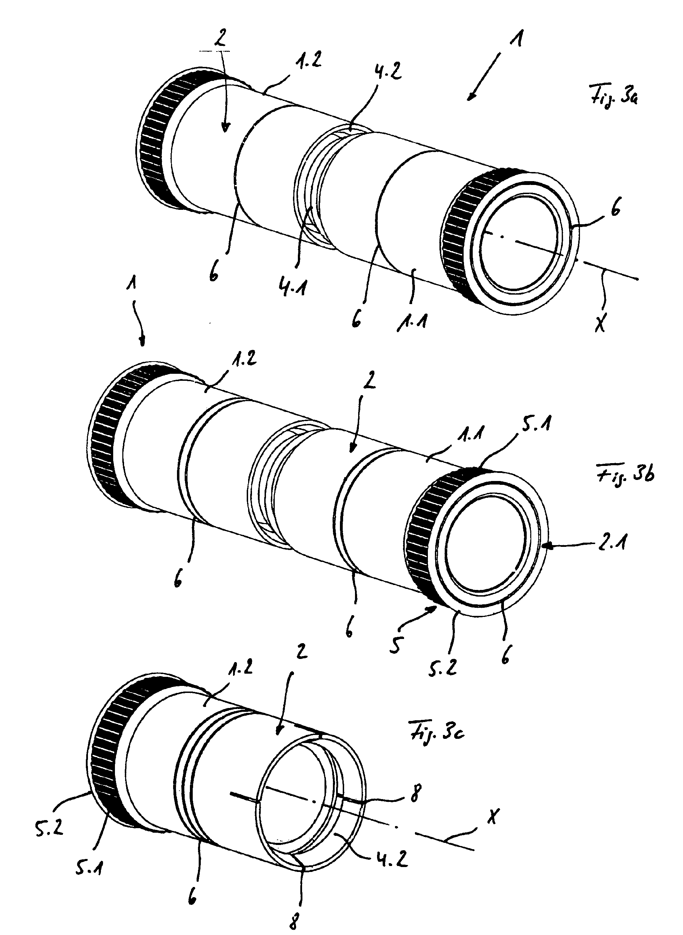

Eine in Fig. 3b beschriebene Stirnseite 2.1 schließt bei verrasteter Hülse bündig mit der jeweiligen Oberfläche der beiden Seiten 3.1, 3.2 des Hohlprofils 3 ab. Hierzu weist ein in Fig. 2 näher beschriebener Bund 5.2 eine Fase auf. Dieser bauphysikalische Vorteil kann mit der bekannten Presshülse nicht erreicht werden, da hier der umgebördelte Bund immer aufträgt.

Das Bauteil 3 ist in diesem Ausführungsbeispiel ein Hohlprofil, das für den Bau von Gerüsten wie bspw. von Zeltgerüsten im Messebau eingesetzt wird. Solche Bauteile werden miteinander verschraubt (nicht dargestellt) oder an diesem Bauteil wird etwas befestigt, etwa Querverstrebungen.

Die Bolzen für die Verschraubung werden durch die Öffnung 3.3 geführt. Es ist unbedingt zu vermeiden, dass das Bauteil 3 beim Befestigen zusammengedrückt wird. Ferner ist zu vermeiden, dass die Lochleibungen der Öffnung 3.3 mit der Zeit ausgeschlagen werden. Gerade beim Einsatz von Profilen aus Aluminium und dünnen Verschraubungsbolzen ist dies sehr häufig der Fall.

Beim Anziehen dieser Schraubverbindung wird die Hülse auf Druck beansprucht, nicht jedoch das Bauteil 3. Die Hülse bewirkt also, dass die Kraft der Verschraubung in Richtung einer Längsachse x nicht unmittelbar auf das Bauteil 3 übertragen wird und somit das Bauteil 3 nicht zusammengedrückt wird. Ferner bewirkt die Hülse, dass die Zugkraft in radialer Richtung zur Längsachse x über die spielfreie Verbindung zwischen dem Bauteil 3 und den Hülsenkörpern 1.1, 1.2 von dem Verschraubungsbolzen auf die Lochleibung übertragen wird.

Fig. 2a zeigt den aus den beiden Hülsenkörpern 1.1, 1.2 zusammengesetzten Hohlkörper 1 der Hülse. Der erste Hülsenkörper 1.1 weist eine umlaufende Rastnase als Verbindungselement 4.1 auf. Die Rastnase 4.1 greift in das als umlaufende Hinterschneidung ausgebildete Verbindungselement 4.2 des zweiten Hülsenkörpers 1.2 ein. Die Verbindungselemente 4.1, 4.2 verrasten, wenn sie in Richtung der Längsachse x über eine Schrägfläche 4.3 zusammengedrückt bzw. verpresst werden. Dabei kommen die Hülsenkörpern 1.1, 1.2 an einer Anschlagfläche 4.4 zur Anlage und stützen sich aneinander ab, wodurch auf die Hülse einwirkende Druckkräfte bei einer Befestigung eines weiteren Bauteils mittels einer durch die Hülse geführten Schraubverbindung von der Hülse selbst aufgenommen werden.

Anstelle einer Verrastung kann auch eine kraftschlüssige Verbindung hergestellt werden, etwa durch eine geeignete Wahl von Presspassungen an den Hülsenkörpern 1.1, 1.2. Auch hier können kommen die Hülsenkörpern 1.1, 1.2 an einer Anschlagfläche 4.4 zur Anlage kommen.

In Figur 2b ist der Hohlkörper aus Fig. 2a mit zwei miteinander über eine Schraubverbindung mit Innengewinde am Verbindungselement 4.1 und mit einem Außengewinde am Verbindungselement 4.2 verbundenen Hülsenkörpern 1.1, 1.2 dargestellt. Auch hier können kommen die Hülsenkörpern 1.1, 1.2 an einer Anschlagfläche 4.4 zur Anlage kommen.

In Figur 2c ist der Hohlkörper aus Fig. 2a mit zwei miteinander über eine Klebstoffschicht 4.5 mit einer Klebeinnenfläche am Verbindungselement 4.1 und mit einer Klebeaußenfläche am Verbindungselement 4.2 verbundenen Hülsenkörpern 1.1, 1.2 dargestellt. Auch hier können kommen die Hülsenkörpern 1.1, 1.2 an einer Anschlagfläche 4.4 zur Anlage kommen.

Die Verbindungselemente 4.1, 4.2 sind jeweils an einem Ende der Hülsenkörper 1.1, 1.2 vorgesehen. Am jeweils den Verbindungselementen 4.1, 4.2 gegenüberliegenden Ende der Hülsenkörper 1.1, 1.2 ist eine Anformung 5 vorgesehen. Die Anformung 5 besteht aus einer Rändelung 5.1 und dem Bund 5.2. Die Rändelung 5.1 dient dazu, den Hülsenkörper 1.1, 1.2 in radialer Richtung im Bauteil 3 zu fixieren. Durch die Rändelung 5.1 wird eine herstellungstechnisch sehr aufwendige Spielpassung zwischen dem Hülsenkörper 1.1, 1.2 und der Öffnung 3.3 vermieden.

Der Bund 5.2 bewirkt, dass der Hohlkörper 1 in Richtung der Längsachse x an den in Fig. 1a bis 1d dargestellten Seiten 3.1, 3.2 des Bauteils 3 anschlägt. Der Hohlkörper 1 hat somit in axialer Richtung kein Spiel und überträgt alle in dieser Richtung eingeleiteten Kräfte.

Eine Länge L des verpressten Hohlkörpers 1 entspricht bevorzugt einem Abstand A der beiden Seiten 3.1, 3.2 des Bauteils 3 gemäß Fig. 1a.

In den Fig. 3a und 3b sind zwei unterschiedlich lange Hohlkörper 1 bestehend aus jeweils zwei Hülsenkörpern 1.1, 1.2 dargestellt. Die beiden Hohlkörper 1 sind durch eine Markierung 6 gekennzeichnet, die Aufschluss über die Abmessungen und ggf. über das verwendete Material gibt. Die Markierung 6 ist auf einer Außenseite 2 und auf der Stirnseite 2.1 der Hülsenkörper 1.1, 1.2 aufgebracht. Die Markierung 6 auf der Außenseite 2 erleichtert die Suche eines bestimmten Hülsenkörpers 1.1, 1.2 in einem Bausatz. Die Markierung 6 auf der Stirnseite 2.1 ermöglicht eine Identifizierung eines schon eingebauten Hülsenkörpers 1.1, 1.2, dessen Außenseite 2 nicht mehr frei liegt.

In Fig. 3c ist der Hülsenkörper 1.2 mit mehreren Schlitzen 8 dargestellt. Die Schlitze 8 trennen die umlaufende Rastnase und verlaufen hierzu in Richtung der Längsachse x. Dadurch wird das Zusammenstecken bzw. Verpressen von zwei Hülsenkörpern 1.1, 1.2 vereinfacht.

### Bezugszeichenliste

- 1: Hohlkörper
- 1.1: erster Hülsenkörper
- 1.2: zweiter Hülsenkörper
- 2: Außenseite
- 2.1: Stirnseite
- 3: Bauteil, Hohlprofil
- 3.1: erste Seite
- 3.2: zweite Seite
- 3.3: Öffnung
- 4.1: Verbindungselement, Rastelement, Hinterschneidung
- 4.2: Verbindungselement, Rastelement, Rastnase
- 4.3: Schrägfläche
- 4.4: Anschlagfläche
- 4.5: Klebstoffschicht
- 5: Anformung
- 5.1: Rändelung
- 5.2: Bund
- 6: Markierung
- 7: Zentrierstab
- 8: Schlitze
- A: Abstand
- x: Längsachse
- L: Länge

## Patentansprüche

1. Hülse zum Einbringen in eine zwei Seiten (3.1, 3.2) eines Bauteils (3) verbindende Öffnung (3.3), die einen eine Längsachse (x) aufweisenden Hohlkörper (1) mit einer Außenseite (2) aufweist, wobei der Hohlkörper (1) zumindest mit einem Teil der Außenseite (2) zumindest in radialer Richtung zur Längsachse (x) an das Bauteil (3) anlegbar ist, wobei der-Hohlkörper (1) durch mindestens zwei in Richtung der Längsachse (x) nacheinander angeordnete Hülsenkörper (1.1, 1.2) gebildet ist, wobei der erste Hülsenkörper (1.1) und der zweite Hülsenkörper (1.2) in axialer Richtung zur Längsachse (x) über zumindest ein Verbindungselement (4.1, 4.2) form- und/oder kraftschlüssig miteinander verbindbar sind
**dadurch gekennzeichnet,**
**dass** beide Hülsenkörper (1.1, 1.2) in Richtung der Längsachse (x) auf einer Seite das Verbindungselement (4.1, 4.2) und auf der dem Verbindungselement (4.1, 4.2) gegenüberliegenden Seite eine Anformung (5) zum Befestigen des Hülsenkörpers (1.1, 1.2) an dem Bauteil (3) aufweisen und zumindest ein Teil der Abformung (5) durch einen auf der Außenseite (2) des Hülsenkörpers (1.1, 1.2) umlaufenden Bund (5.2) gebildet ist und der Hülsenkörper (1.1, 1.2) über den Bund (5.2) in Richtung der Längsachse (x) gegen das Bauteil (3) anlegbar ist.

2. Hülse nach Anspruch 1,
**dadurch gekennzeichnet,**
**dass** das Verbindungselement (4.1, 4.2) als Rastelement, als Gewinde, als Klebeverbindung oder als Presssitzverbindung ausgebildet ist.

3. Hülse nach Anspruch 1 oder 2,
**dadurch gekennzeichnet,**
**dass** der erste Hülsenkörper (1.1) zumindest teilweise in den zweiten Hülsenkörper (1.2) einführbar ist.

4. Hülse nach einem der Ansprüche 1 bis 3,
**dadurch gekennzeichnet,**
**dass** zumindest ein Teil der Anformung (5) durch eine auf der Außenseite (2) des Hülsenkörpers (1.1, 1.2) umlaufende Rändelung (5.1) gebildet ist, die derart dimensioniert ist, dass sie zumindest über einen Teil des Umfangs des Hülsenkörpers (1.1, 1.2) formschlüssig in das Bauteil (3) eingreifen kann.

5. Hülse nach einem der Ansprüche 1 bis 4,
**dadurch gekennzeichnet,**
**dass** der Bund (5.2) eine Stirnseite (2.1) des Hülsenkörpers (1.1, 1.2) bildet.

6. Hülse nach einem der Ansprüche 1 bis 5,
**dadurch gekennzeichnet,**
**dass** der Hülsenkörper (1.1, 1.2) zumindest eine optisch erkennbare Markierung (6) über eine oder mehrere Eigenschaften des Hülsenkörpers (1.1, 1.2) auf der Außenseite (2) und/oder auf der Stirnseite (2.1) aufweist.

7. Hülse nach einem der Ansprüche 1 bis 6,
**dadurch gekennzeichnet,**
**dass** der Hohlkörper (1) einen kreisrunden, ovalen oder rechteckförmigen Querschnitt aufweist.

8. Hülse nach einem der Ansprüche 1 bis 7,
**dadurch gekennzeichnet,**
**dass** in die beiden Hülsenkörper (1.1, 1.2) ein Zentrierstab (7) einführbar ist, mit Hilfe dessen die beiden Hülsenkörper (1.1, 1.2) zueinander zentrierbar sind.

9. Hülse nach einem der Ansprüche 1 bis 8,
**dadurch gekennzeichnet,**
**dass** die beiden Hülsenkörper (1.1, 1.2) manuell und/oder mit einem manuell oder pneumatisch oder hydraulisch angetriebenen Werkzeug verbindbar sind.

10. Hülse nach einem der Ansprüche 1 bis 9,
**dadurch gekennzeichnet,**
**dass** der Hülsenkörper (1.1, 1.2) im Bereich des Verbindungselements (4.1, 4.2) in Richtung der Längsachse (x) verlaufende Schlitze (8) aufweist.

11. Hülse nach einem der Ansprüche 1 bis 10,
**dadurch gekennzeichnet,**
**dass** das als Rastelement (4.1) ausgebildete Verbindungselement des ersten Hülsenkörpers (1.1) aus zumindest einer in Umfangsrichtung umlaufenden Hinterschneidung und das als Rastelement (4.2) ausgebildete Verbindungselement (4.2) des zweiten Hülsenkörpers (1.2) aus einer in Umfangsrichtung umlaufenden Rastnase gebildet ist, die in die Hinterschneidung eingreift.

12. Hülse nach einem der Ansprüche 1 bis 11,
**dadurch gekennzeichnet,**
**dass** mindestens ein dritter Hülsenkörper mit zwei Verbindungselementen (4.1, 4.2) vorgesehen ist, der als Verlängerung zwischen den ersten Hülsenkörper (1.1) und den zweiten Hülsenkörper (1.2) einsetzbar ist.

13. Bauteil mit einer Hülse in einer zwei Seiten des Blauteil verbindenden Öffnung, insbesondere ein Hohlprofil, **gekennzeichnet durch** eine Hülse gemäß einem der Ansprüche 1 bis 12.

## Claims

1. A sleeve to be placed in an opening (3.3) connecting two sides (3.1, 3.2) of a component (3) comprising a hollow body (1) exhibiting a longitudinal axis (x) and an external surface (2), wherein the hollow body (1) can be brought, at least with part of its external surface (2) and at least in the radial direction relatively to the longitudinal axis (x), to rest against the component (3), said hollow body (1) being formed by at least two sleeve members (1.1, 1.2) disposed in-line in the direction of said longitudinal axis (x), the first sleeve member (1.1) and the second sleeve member (1.2) being capable of being interlocked and/or frictionally locked in the axial direction relative to said longitudinal axis (x) via at least one coupling element (4.1, 4.2),
**characterized in that**
both sleeve members (1.1, 1.2) have a shaped region (5) extending in the direction of said longitudinal axis (x) at one end of said coupling element (4.1, 4.2) and at the end remote from said coupling element (4.1, 4.2), for the purpose of attaching said sleeve member (1.1, 1.2) to said component (3), and at least part of said shaped region (5) is formed by a collar (5.2) surrounding the external surface (2) of said sleeve member (1.1, 1.2) and said sleeve member (1.1, 1.2) can be brought to rest against said component (3) in the direction of the longitudinal axis (x) via said collar (5.2).

2. The sleeve according to claim 1,
**characterized in that**
said coupling element (4.1, 4.2) is in the form of a locking element, a thread, an adhesive joint or a force fit connection.

3. The sleeve according to claim 1 or claim 2,
**characterized in that**
said first sleeve member (1.1) can be inserted at least partially into said second sleeve members (1.2).

4. The sleeve according to any one of claims 1 to 3,
**characterized in that**
at least a portion of said shaped region (5) is formed by a knurl (5.1) surrounding said external surface (2) of the sleeve member (1.1, 1.2), said knurl being dimensioned such that it can positively engage the component (3) along at least a portion of the circumference of said sleeve member (1.1, 1.2).

5. The sleeve according to any one of claims 1 to 4,
**characterized in that**
said collar (5.2) forms a front face (2.1) of the sleeve member (1.1, 1.2).

6. The sleeve according to any one of claims 1 to 5,
**characterized in that**
said sleeve member (1.1, 1.2) exhibits at least one visually recognizeable code mark (6) on said external surface (2) and/or on said front face (2.1) providing information on one or more properties of said sleeve member (1.1, 1.2).

7. The sleeve according to any one of claims 1 to 6,
**characterized in that**
said hollow body (1) has a round, oval, or rectangular cross-section.

8. The sleeve according to any one of claims 1 to 7,
**characterized in that**
a centering rod (7) can be inserted into the two sleeve members (1.1, 1.2), with the aid of which centering rod (7) the two sleeve members (1.1, 1.2) can be centered.

9. The sleeve according to any one of claims 1 to 8,
**characterised in that**
the two sleeve members (1.1, 1.2) can be interconnected manually and/or by means of a manually or pneumatically or hydraulically driven tool.

10. The sleeve according to any one of claims 1 to 9,
**characterized in that**
said sleeve member (1.1, 1.2) has slits (8) in the region of said coupling element (4.1, 4.2), which slits extend in the direction of the longitudinal axis (x).

11. The sleeve according to any one of claims 1 to 10,
**characterized in that**
the coupling element (4.1) of said first sleeve member (1.1) designed as a locking element is in the form of at least one undercut extending in the circumferential direction, and the coupling element (4.2) of said second sleeve member (1.2) designed as a locking element (4.2) is in the form of a snap lug which extends in the circumferential direction and which engages said undercut.

12. The sleeve according to any one of claims 1 to 11,
**characterized in that**
at least a third sleeve member having two coupling elements (4.1, 4.2) is provided which can be used as an extension between said first sleeve member (1.1) and said second sleeve member (1.2).

13. A component having a sleeve in an opening connecting the two sides of the component, particularly a hollow section,
**characterized by**
a sleeve as defined in any one of claims 1 to 12.

## Revendications

1. Douille à introduire dans une ouverture (3.3) reliant deux côtés (3.1, 3.2) d'un élément (3), laquelle présente un corps creux (1) présentant un axe longitudinal (x) et doté d'un côté extérieur (2), le corps creux (1) pouvant être appliqué au moins avec une partie du côté extérieur (2) au moins dans la direction radiale par rapport à l'axe longitudinal (x) sur l'élément (3), le corps creux (1) étant formé par au moins deux corps de douille (1.1, 1.2) disposés l'un derrière l'autre en direction de l'axe longitudinal (x), le premier corps de douille (1.1) et le second corps de douille (1.2) pouvant être reliés l'un à l'autre dans la direction longitudinale par rapport à l'axe longitudinal (x) au moyen d'au moins un élément de liaison (4.1, 4.2) à engagement positif et/ou par adhérence,
**caractérisée en ce que**
les deux corps creux (1.1., 1.2) présentent en direction de l'axe longitudinal (x) sur un côté l'élément de liaison (4.1, 4.2) et sur le côté opposé à l'élément de liaison (4.1, 4.2) un façonnage (5) pour la fixation du corps de douille (1.1, 1.2) sur l'élément (3) et au moins une partie du façonnage moulée (5) est formée par une collerette (5.2) circulant sur le côté extérieur (2) du corps de douille (1.1, 1.2) et **en ce que** le corps de douille (1.1, 1.2) peut être appliqué au moyen de la collerette (5.2) en direction de l'axe longitudinal (x) contre l'élément de construction (3).

2. Douille selon la revendication 1,
**caractérisée en ce que**
l'élément de liaison (4.1, 4.2) est conçu sous forme d'élément d'encliquetage, de filetage, d'assemblage collé ou de liaison à ajustement serré.

3. Douille selon la revendication 1 ou 2,
**caractérisée en ce que**
le premier corps de douille (1.1) peut être introduit au moins partiellement dans le second corps de douille (1.2).

4. Douille selon l'une quelconque des revendications 1 à 3,
**caractérisée en ce que**
au moins une partie du façonnage (5) est formée par un moletage (5.1) circulant sur le côté extérieur (2) du corps de douille (1.1, 1.2), qui est dimensionné de telle sorte qu'il peut s'engager au moins sur une partie du pourtour du corps de douille (1.1, 1.2) à engagement positif dans l'élément de construction (3).

5. Douille selon l'une quelconque des revendications 1 à 4,
**caractérisée en ce que**
la collerette (5.2) forme un côté frontal (2.1) du corps de douille (1.1, 1.2).

6. Douille selon l'une quelconque des revendications 1 à 5,
**caractérisée en ce que**
le corps de douille (1.1, 1.2) présente au moins un marquage (6) apparent visuellement au moyen d'une ou de plusieurs propriétés du corps de douille (1.1, 1.2) sur le côté extérieur (2) et/ou sur le côté frontal (2.1).

7. Douille selon l'une quelconque des revendications 1 à 6,
**caractérisée en ce que**
le corps creux (1) présente une section circulaire, ovale ou rectangulaire.

8. Douille selon l'une quelconque des revendications 1 à 7,
**caractérisée en ce que**
une barre de centrage (7) peut être introduite dans les deux corps creux (1.1, 1.2), barre qui permet de centrer les deux corps de douille (1.1, 1.2), l'un par rapport à l'autre.

9. Douille selon l'une quelconque des revendications 1 à 8,
**caractérisée en ce que**
les deux corps de douille (1.1, 1.2) peuvent être reliés manuellement et/ou avec un outil entraîné manuellement ou de façon pneumatique ou hydraulique.

10. Douille selon l'une quelconque des revendications 1 à 9,
**caractérisée en ce que**
le corps de douille (1.1, 1.2) présente des fentes (8) agencées en direction de l'axe longitudinal (x) dans la zone de l'élément de liaison (4.1, 4.2).

11. Douille selon l'une quelconque des revendications 1 à 10,
**caractérisée en ce que**
l'élément de liaison, conçu comme élément d'encliquetage (4.1), du premier corps de douille (1.1), est formé d'au moins une contre-dépouille agencée dans la direction périphérique et l'élément de liaison (4.2), conçu comme élément d'encliquetage (4.2), du second corps de douille (1.2) est formé d'un ergot d'encliquetage circulant dans la direction périphérique, qui s'engage dans la contre-dépouille.

12. Douille selon l'une quelconque des revendications 1 à 11,
**caractérisée en ce que**
au moins un troisième corps de douille est prévu avec deux éléments de liaison (4.1, 4.2), qui peut être utilisé comme prolongement entre le premier corps de douille (1.1) et le second corps de douille (1.2).

13. Élément comprenant une douille dans une ouverture reliant deux côtés de l'élément, en particulier un profilé creux, **caractérisé par** une douille selon l'une quelconque des revendications 1 à 12.
